# DEMANDE DE BREVET EUROPEEN

(11) **EP 1 231 727 A1**
(43) Date de publication de la demande: **14.08.2002**
(21) Numéro de dépôt: 02290314.0
(22) Date de dépôt: 08.02.2002
(51) Int. Cl.: H04H 1/10

(54) **Système évolutif d'animation personnalisée et différentiée pour différents secteurs**

(30) Priorité: 08.02.2001 FR 0101689; 20.06.2001 FR 0108109
(71) Demandeur: Jingle Box France, 76100 Rouen (FR)
(72) Inventeur: De Sousa-Calico,Philippe, Georges, 76120 Grand Quevilly (FR); Tertrais, Pierre-Francois, Dominique, 76960 Notre Dame de Bondeville (FR)
(74) Mandataire: Cabinet HERRBURGER

(57) **Abrégé**

Système comprenant une centrale (C) reliée à des stations locales associées à une installation de sonorisation. La centrale (C) comprend un micro-ordinateur ( Pi) gérant une banque de musique, des fichiers de programmes d'échantillons, de messages d'animation et un agenda. Des moyens d'entrée permettent l'introduction des informations musicales, des moyens d'accès direct pour une intervention directe sur une station locale. Les informations musicales sont envoyées vers chaque station locale qui les émet selon le programme vers la sonorisation. Le système permet une animation personnalisée et sectorisée pour des programmes de musique, de messages, d'émission de senteurs, d'images numériques et de lumières.

## Description

L'invention concerne un système d'animation personnalisée et sectorisée, évolutif, pour émettre un programme de musique, de messages, d'émission de senteurs, d'images numériques, de lumières, selon des programmes préétablis mais évolutifs.

L'animation sonore, en particulier sur les lieux de vente soit dans des hypermarchés, des centres commerciaux ou des rues commerçantes, peut constituer un élément important pour dynamiser le commerce. Or les surfaces de vente n'exploitent pas ces possibilités d'animation sonore de manière efficace car les solutions existant actuellement n'offrent pas les qualités, les caractéristiques et les possibilités qui conviennent.

Il existe actuellement outre les systèmes connus consistant à faire défiler une boucle préenregistrée, différents systèmes plus évolués mais néanmoins peu satisfaisants.

Une première solution existante d'animation sonore consiste à remplacer la bande magnétique par un CD gravé, renouvelé périodiquement par exemple tous les mois. Cette solution est figée car elle ne permet pas de modifications dans l'intervalle des remplacements de CD. De plus une intervention directe est certes possible mais nécessite l'intervention du personnel du lieu de vente ce qui n'est pas toujours facile ou réussi si le personnel n'est pas suffisamment préparé pour de telles interventions.

Enfin ce système rigide ne permet pas des modifications à court terme, dans l'intervalle d'une journée ou de quelques heures.

Il existe un autre système informatisé avec émission par satellite des messages d'annonce mais diffusant sur une seule zone sur un même site.

Enfin il existe des sociétés d'animation avec la présence d'un animateur et d'un technicien sur le lieu où se fait l'animation.

Cette solution n'est envisageable que de manière exceptionnelle et non pas systématique pour des raisons de coûts élevés.

Outre la rigidité des systèmes connus, leur coût élevé s'ils doivent présenter une certaine souplesse d'adaptation, l'un des principaux inconvénients est la lassitude que peut entraîner la rediffusion systématique des mêmes messages sonores ou morceaux musicaux diffusés en boucle et peu diversifiés, la lassitude du personnel qui subit cette sonorisation.

Cette gêne peut même exister au niveau des acheteurs car la diffusion sonore est souvent aléatoire et bruyante avec des différences de niveau sonore perceptibles voire brutales des différents morceaux musicaux ou encore l'interruption inopinée décalée d'un animateur qui fait une communication sur une promotion.

Or l'animation sonore, en particulier des lieux de vente pourrait être un atout considérable pour dynamiser les ventes.

La présente invention a pour but de développer un système évolutif d'animation sensorielle sectorisée et personnalisée pour les lieux de vente, qu'il s'agisse de centres commerciaux, de grandes surfaces ou de coeurs de ville.

A cet effet, l'invention concerne un système du type défini ci-dessus caractérisé en ce qu'une centrale de gestion et de commande reliée à au moins une station locale associée à une installation de sonorisation pour lui fournir les signaux sonores et une installation de vidéo projection numérisée pour lui fournir les signaux vidéo à émettre
A) la centrale comprenant
   * un micro-ordinateur gérant
      - une banque de musique contenant les échantillons musicaux disponibles pour établir des programmes musicaux à diffuser,
      - un fichier de programmes d'échantillons,
      - un fichier de messages d'animation sonores et vidéo,
      - un ficher agenda contenant les grilles de diffusion (période d'émission des programmes d'échantillons et des messages) en fonction des jours et des heures du jour,
      - un fichier des clients et des stations locales associées à la centrale,
   * des moyens d'entrée pour
      - des informations musicales pour réaliser compléter et renouveler la banque musicale par l'ajout ou la suppression d'échantillons,
      - des informations relatives aux clients,
      - des informations de mise à jour des informations des clients,
   * des moyens d'accès direct pour une intervention dans une station locale, de manière prioritaire à son fonctionnement programmé,
   * un moyen de compression des données sonores et vidéo,
   * un modem RTC ou Internet haut débit en sortie de la centrale pour communiquer avec les stations locales,
B) au moins une station locale comprenant
   * une unité centrale et au moins un disque dur recevant
      - les échantillons comprimés, les messages comprimés et vidéo comprimés, et les programmes d'échantillons et vidéo associés à la station locale,
      - un moyen de décompression en sortie de station,
      - un modem RTC ou Internet haut débit à l'entrée de la station locale pour communiquer avec la centrale,
   chaque station locale peut être connectée à un ou plusieurs auxiliaires de communications par l'intermédiaire d'un réseau local utilisant le protocole de communication TCP/IP. Le réseau utilise les services d'un hub ou switch général pouvant être connecté à plusieurs autres hub (concentrateur ou multirépéteur) ou switch selon l'importance de l'installation.
C) la centrale établissant pour chaque station locale ou groupe de stations locales,
   * un programme d'échantillons et de messages d'animation contenant les références des échantillons et des messages
   * un agenda des échantillons et des messages (dates d'émission),
   le programme d'échantillons étant établi en fonctions des informations décrivant le site dans lequel se trouve l'installation de sonorisation,
   la centrale transmettant à chaque station locale
   - les échantillons et les messages comprimés, les messages non comprimés, les programmes d'échantillons et de messages et l'agenda pour les enregistrer dans la station locale,
   l'émission des signaux vers l'installation d'animation étant gérée localement par l'unité centrale de la station locale selon le programme d'échantillons et de messages et l'agenda, les signaux sonores et vidéo étant décomprimés en sortie de station avant d'attaquer l'installation d'animation.

Du fait de sa souplesse d'adaptation, un tel système d'animation permet non seulement l'animation de galeries marchandes, de coeurs de ville, de grandes surfaces, d'hypermarchés ou de grands magasins, mais également d'autres lieux accueillant du public comme des administrations, des services publics comme les hôpitaux, les gares, les parkings, les aéroports, les lieux de rencontre ou de manifestation.

Ce système permet une transformation, une adaptation, et une évolution quasi instantanée des informations émises (échantillons musicaux et messages d'animation olfactifs, sonores et visuels) sans nécessiter de déplacement jusqu'à la station locale.

Ce procédé permet un marketing direct visioaudio-sensoriel invitant à la mise en scène et à la théâtralisation de l'environnement ciblé en créant une ambiance thématique élaborée suivant un scénario.

Les programmes musicaux sont établis en fonction des données concernant le lieu de leur diffusion, tenant compte du public auquel s'adressent les signaux sonores, olfactifs et visuels suivant l'heure de la journée, le type de surface commerciale. Les messages peuvent concerner le public mais également le personnel du lieu. La diffusion peut être programmée pour commencer avant l'ouverture au public et se poursuivre après celle-ci pour diffuser des messages destinés au personnel qui préparent le site ou le met en ordre à la fin de la journée.

L'accès direct en fonction d'événements imprévisibles est également possible.

Le système est particulièrement intéressant pour l'utilisateur, c'est-à-dire le site où est installée la station locale car aucune intervention n'est nécessaire, la gestion étant faite à partir de la centrale qui agit à distance sur l'unité équipant la station locale, soit par le programme et l'agenda soit par accès direct.

Les seules interventions locales sont des interventions d'entretien et non de gestion du déroulement des opérations. Parmi ces interventions locales, il y a le service des installations autres que celle assurant la sonorisation, comme le rechargement des produits consommables et notamment des liquides distribués par les pulvérisateurs ou diffuseurs, les recharges de produits placés dans des distributeurs d'échantillons et autres installations de ce type, susceptibles d'être commandées par des messages ou signaux correspondants.

La présente invention sera décrite ci-après de manière plus détaillée à l'aide d'un mode de réalisation représenté schématiquement dans les dessins annexés dans lesquels :
- la figure 1 est une vue d'ensemble du système,
- la figure 2 montre un schéma par blocs de la centrale du système.

Selon les figures, l'invention concerne un système personnalisé d'animation notamment de sonorisation sonore, personnalisé. Ce système est évolutif pour émettre une suite d'échantillons de musique et de messages selon des programmes préétablis mais évolutifs, c'est-à-dire non figés et qui peuvent être modifiés de façon quasi instantanée.

Le système d'animation est destiné à réaliser une animation globale, tant musicale que d'ambiance par l'environnement lumineux, sonore olfactif et audiovisuel grâce à la projection d'images, l'émission de messages lumineux, sonores et olfactifs traités par des installations locales commandées par les signaux à partir de la centrale.

Les messages vocaux et vidéo peuvent être des annonces publicitaires ou commerciales, promotionnelles ou encore des informations de caractère général. Les messages sonores sont principalement des bruitages d'ambiance, avantageusement combinés à des messages lumineux, audiovisuels, visuels auxquels il est intéressant d'associer également des messages olfactifs sous la forme d'émission de parfum ou de senteurs par des diffuseurs ou des pulvérisateurs commandés.

Le système se compose d'une centrale C et de stations locales STi en liaison avec la centrale.

La centrale C prépare les informations sonores et données vidéo numérisées à l'état comprimé. La station locale STi enregistre ces informations sonores et données vidéo numérisées et les et les émet selon un programme défini, propre à la station locale STi, mais établi par la centrale suivant des critères de définition dépendant de la station locale et des nécessités auxquelles doivent satisfaire les messages à émettre par la station locale.

Les différentes informations sonores et données vidéo numérisées sont stockées après compression dans la station locale STi pour être émises après décompression directe par l'intermédiaire de l'installation de sonorisation SONO et de vidéo-projection VIDEO combinée à la station locale STi.

Dans la suite de la description, les morceaux musicaux à diffuser seront appelés échantillons musicaux ou simplement échantillons. Ils représentent des sites ou des oeuvres musicales complètes et des messages dans leur intégralité.

Les messages sont envoyés par le microprocesseur µPi soit à une installation de sonorisation SONOR distincte de l'installation SON diffusant les échantillons musicaux, soit à celle-ci après décompression s'il y a lieu. Les messages d'animation sonore sont également envoyés vers cette installation de sonorisation soit vers des installations spécifiques par exemple de bruitage. Les messages vidéo sont envoyés vers des installations de vidéo projection audiovisuelles, les messages lumineux sont envoyés vers des installations d'animation lumineuse et les messages olfactifs sont envoyés vers les diffuseurs ou les pulvérisateurs de parfum ou de senteurs.

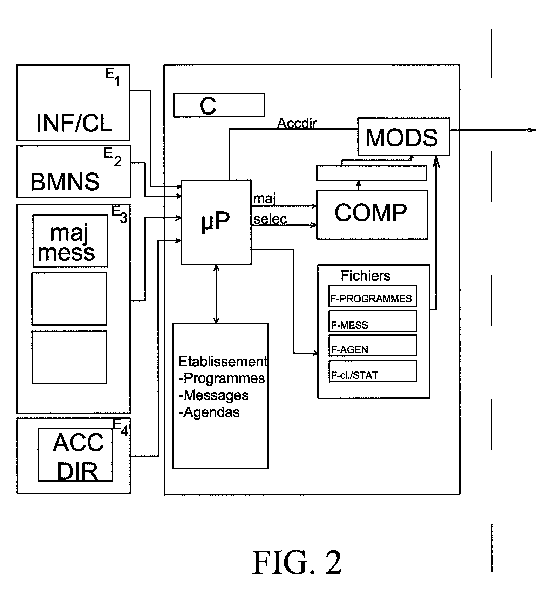

Selon la figure 2, la centrale C gérant le système se compose d'un micro-ordinateur µP. Ce micro-ordinateur commande une banque de musique BMUS contenant tous les échantillons musicaux ECHi disponibles dans le système. Le micro-ordinateur µP gère également un fichier de programmes d'échantillons F-PRECH associé à chaque client ou station locale STi, un fichier de messages à diffuser F-MESS, également associé de manière personnalisée à chaque station locale STi ou groupe de stations locales et enfin un fichier agenda F-AG contenant les grilles de diffusion. Il s'agit des périodes d'émission des programmes d'échantillons et de messages. Ce fichier est établi en fonction des jours et heures du jour, c'est-à-dire principalement en fonction du type de public fréquentant le site aux différentes heures de la journée ou aux différents jours de la semaine.

Enfin, la centrale comporte une image de fichiers nécessaire à la gestion des stations locales F-CL/-STi associés à la centrale C.

La centrale C comporte des moyens d'entrée E1, E2, E3, E4 pour recevoir les différentes informations nécessaires à l'établissement des fichiers et des programmes et à leur mise à jour.

Une première entrée E1 est relative aux clients et aux stations locales STi.

L'expression « client » peut correspondre à une seule station locale ou à un groupe de stations locales, suivant que le client est un site indépendant ou un site dépendant d'une chaîne telle qu'une chaîne de grandes surfaces ou qu'une station même appartenant à une chaîne doit être traitée différemment d'une autre station du même groupe. Suivant le cas, les informations seront strictement individualisées pour le site ou certains sites appartenant à une même chaîne auront des informations communes (échantillons musicaux et messages).

Une station locale peut également être divisée en secteurs ou en zones physiques, définis, dans lesquels on peut créer une animation particulière. Les informations destinées à cette station locale auront donc des adresses particulières pour leur transmission aux secteurs aux zones physiques auxquelles elles sont destinées. On aura ainsi une programmation spécifique par zone avec une grille de programmation musicale, de messages d'animation sonore, vidéo, olfactifs la gestion est centralisée par la station locale.

Cette entrée E1 transmet ainsi au micro-ordinateur µP des informations INF/CL. Ces informations transmises identifient les clients et les sites et définissent également les paramètres du public se trouvant sur le site à un moment donné, du souhait du client sur l'ambiance à créer, et toutes les informations démographiques et commerciales pour permettre d'établir les programmes d'échantillons musicaux.

Une seconde entrée E2 correspond aux morceaux musicaux constituant la banque musicale BMUS. Les morceaux musicaux sont entrés avec leurs informations d'identification dans la banque musicale. Cet enregistrement des échantillons musicaux se fait dans la banque musicale à l'état comprimé.

La banque peut recevoir par exemple de l'ordre de 5 à 10 000 échantillons musicaux correspondant chacun en moyenne à un morceau musical de variété (durée de 3 à 5 minutes).

Ces échantillons sont mis à jour en fonction de leur parution et de leur intérêt. Le renouvellement de la banque musicale est périodique.

Une troisième entrée E3 de la centrale C est celle des messages d'animation sonore, vidéo et olfactifs et de la grille de programmes. Les messages sont demandés par le client. Ces messages sont figés pour une période donnée. Ils peuvent également être émis de manière exceptionnelle et unique.

Les messages d'animation dans le cadre du présent système comprennent toute sorte de messages d'animation destinés à créer une ambiance et qui ne sont pas soumises aux mêmes impératifs que les messages musicaux comprimés ou non comprimés. Les messages peuvent être des messages vocaux tels que des annonces et notamment des annonces commerciales, publicitaires, promotionnelles mais aussi des messages fonctionnels assimilables à des signaux d'instructions. Les signaux d'instructions peuvent commander des installations locales d'animation ou de création d'ambiance comme des installations lumineuses ou des diffuseurs ou pulvérisateurs de parfum ou de senteurs, travaillant en fonction du message de communication en association avec la diffusion sonore.

L'entrée des messages E3 se fait sous la forme de mises à jour de messages ; après les premiers messages associés à une station, les messages suivants sont considérés comme des mises à jour (suppression de message anciens et création de messages nouveaux).

Les messages sont inscrits dans le fichier messages F - MESS dans la centrale C. Les messages et les échantillons musicaux à émettre par une station locale STi sont définis dans le temps par une grille. Cette grille est introduite également dans la centrale C dans un fichier agenda F-AG qui contient la date des événements (jour et heure de diffusion d'un échantillon musical ou d'un message).

Cette grille est également susceptible d'une mise à jour pour modifier l'horaire ou le jour de la diffusion ou la suppression d'un événement en cas de suppression du message qui lui correspond.

Enfin la centrale C comporte une entrée E4 pour un accès direct permettant la transmission d'un message ACCDIR directement à la station locale pour l'émission d'un message non programmé, sans que ce message ne soit préalablement enregistré dans la station locale.

Là aussi le message peut être une combinaison d'un message vocal et d'un autre message d'ambiance tel qu'un bruitage, une animation audiovisuelle et/ou la pulvérisation ou la diffusion d'un parfum ou d'une senteur, commandées par le signal envoyé à un pulvérisateur ou à un diffuseur local.

En fonction des informations reçues, le micro-ordinateur µP établi, soit automatiquement soit de manière assistée, le programme d'édition musicale c'est-à-dire la suite des échantillons, la liste des messages et les agendas pour chaque station locale.

Lorsque l'ensemble des éléments associés à une station locale STi est prêt, il est transmis à cette station par l'intermédiaire du modem MEDS de la centrale en utilisant par exemple le réseau téléphonique commuté RTC.

Les informations non sonores des fichiers de programmes, éventuellement aussi les messages sonores ou de signaux d'instructions, sont transmis directement par le modem alors que les échantillons musicaux ECHi sont transmis à partir de la banque musicale BMUS après compression COMP, à travers le modem MODS et la ligne de transmission jusqu'à la station locale STi destinataire.

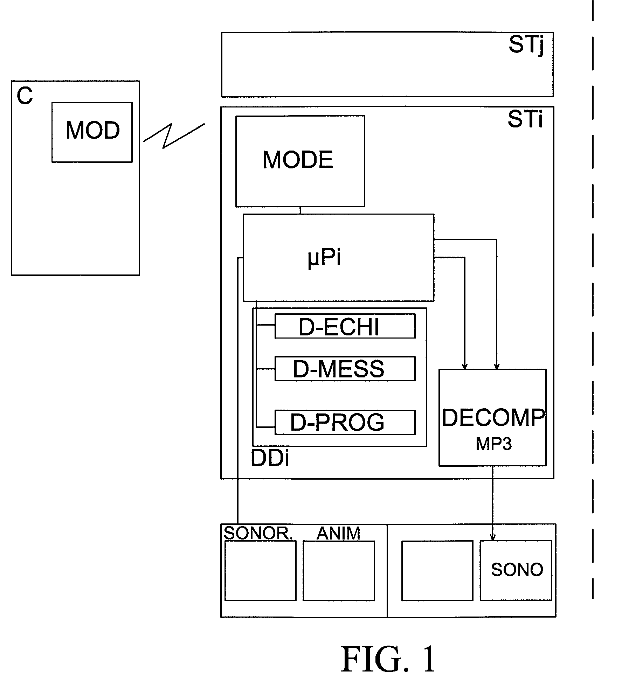

La centrale C communique avec différentes stations STi/STj dont la configuration est identique. Seule la structure de la station STi a été explicitée à la figure 1.

La station STi se compose d'un micro-ordinateur ou microprocesseur µPi, associé à un modem RTC ou Internet haut débit MODE relié au modem de la centrale C. La station comporte également au moins un disque dur DDi (suivant le volume d'informations à recevoir). Chaque disque dur ou partition du même disque dur DDi contient les échantillons ECHi, comprimés, les messages et les programmes d'édition.

La station STi comporte également un moyen de décompression DECOMP en sortie. La compression/décompression se fait par exemple selon le procédé MP3.

La station STi est reliée à l'installation de sonorisation SONO.

La station STi peut être connectée à un ou plusieurs auxiliaires de communication dont le rôle est de :
- diffuser des échantillons sonores mono, stéréo ou quadriphoniques,
- diffuser des images numériques, clips vidéo ou films,
- commander des relais permettant la mise en marche ou l'arrêt de diffuseurs olfactifs, lumières ou tout autre contact électrique,
- collecter des informations provenant de capteurs divers (niveau sonore, luminosité, niveau d'un liquide, alarmes) et de les envoyer à la station locale Sti. Le comportement de la station locale peut être modifié automatiquement par l'arrivée de ces informations.

Un auxiliaire de communication est une carte électronique, présente sur chaque zone de diffusion, comprenant :
- Une interface Ethernet 10 ou 100 Base T sur laquelle sera connectée la station locale Sti par l'intermédiaire d'un réseau local,
- Une mémoire vive,
- Un microprocesseur,
- Un module de mémoire ROM dans lequel sera stocké le programme de gestion des données,
- Une interface série optionnelle,
- Un décodeur de données audio MP3,
- Un décodeur de données vidéo DivX ou MPEG2,
- Un convertisseur DA,
- Un préamplificateur audio stéréo,
- Une alimentation,
- 8 sorties relais,
- 8 entrées opto-coupleurs,
- Un module de mesure de niveau sonore optionnel,
- Un module optionnel de contrôle de fonctionnement des amplificateurs externes.

Les données audio et vidéo sont envoyées brutes (compressées) par la station locale Sti vers l'auxiliaire de communication de la zone concernée. L'auxiliaire de communication a pour tâche de les collecter (interface Ethernet) et de les stocker temporairement dans une mémoire tampon de type FIFO, afin que chaque paquet de données puisse être décodé par le décodeur MP3 ou DivX. Les données audio ainsi décompressées sont envoyées sur un préamplificateur, qui sera lui-même connecté à la sonorisation du client. Les données vidéo seront envoyées directement sur un périphérique (moniteur, téléviseur, écran LCD, mur d'images ou vidéo projecteur) installé chez le client.

Les 8 sorties relais peuvent commander indépendamment 8 périphériques (diffuseurs olfactifs, éclairage, alarme, amplificateurs...).

Les 8 entrées par opto-coupleurs peuvent réceptionner les informations envoyées par 8 capteurs indépendants.

Après la réception des différentes installations et de son programme de fonctionnement, la station locale STi fonctionne de manière autonome. Les différents événements sont déclenchés par l'horloge qui, en fonction du programme, appelle les échantillons musicaux ECHi les uns à la suite des autres en intercalant, le moment voulu, le message. Les échantillons musicaux sont transmis à l'installation de sonorisation après avoir été décomprimés en direct, c'est-à-dire au moment de leur émission.

Les différents fonctionnements pour la conception des programmes musicaux, l'occupation du temps disponible, la création des programmes ou encore la grille de diffusion et toutes les fonctions liées à celle-ci ainsi que la gestion des programmes et la gestion de diffusion, toutes opérations assurées par la centrale seront détaillées ci-après.

La banque musicale présente différentes fonctions. Elle conçoit des programmes musicaux en fonction d'un diagnostic issu de l'analyse du questionnaire soumis au client sur son environnement public ou commercial, rempli par celui-ci et correspondant au site auquel est destiné le programme et correspondant au site auquel est destiné le programme. En fonction de cela, on réalise le programme musical. Ces programmes sont conçus suivant des critères et après analyse du questionnaire en fonction des exigences du client. Le nombres de programmes que la banque peut gérer est pratiquement illimité.

Dans la conception des programmes, un découpage du temps par tranche horaire est opéré en fonction des différents critères.

Il est affiché, pour chaque zone, sur chaque tranche horaire, le choix du rythme musical (Bit Par Minute) sur une échelle par exemple de un à cinq niveaux, souhaité par le client et issu du diagnostic. Une répartition plus fine peut être envisagée.

Dans la conception des programmes musicaux entre également le genre musical choisi par le client en fonction de la coloration musicale qu'il entend donner à la sonorisation.

La conception de la banque gère également le taux de diffusion en fonction de certaines règles telles que les titres français, internationaux, ou thématiques ou encore le taux de diffusion des nouveautés par rapport aux standards musicaux.

Le taux de répétition d'un même titre dans un même programme est également défini. Dans le même ordre d'idées, l'intervalle minimum d'apparition d'un même titre dans un même programme est défini. Enfin, le volume sonore est géré sur une échelle par exemple de 1 à 19 dans le programme ou dans chaque tranche horaire.

On peut générer automatiquement un certain nombre de programmes répondant à un catalogue de critères.

Dans cette phase de création de programmes, on saisit un radical auquel s'ajoute automatiquement un suffixe correspondant aux numéros des programmes. Les éléments nécessaires au programme sont copiés sur l'unité de stockage du client. En fin de génération automatique des programmes, une liste du contenu de chaque programme est créée avec les titres, interprètes et la durée, exploitable au travers d'un tableur classique.

La fonction d'agenda établit une grille de diffusion contenant les programmes et les messages. Cette grille est organisée par jour et par heure avec une répartition de tranches de 3 minutes sur 24 heures. L'agenda intègre automatiquement les programmes musicaux quotidiens sur une période donnée avec sélection des jours types durant lesquels les programmes doivent être diffusés. L'agenda crée des masques pour des messages fixes destinés à être répétés quotidiennement et à heure fixe. Il génère également, de manière automatique, des programmes de messages, pouvant apparaître aléatoirement pendant la période de diffusion.

L'agenda a également les fonctions de répétition et d'annulation d'une opération ainsi que la fonction d'arrêt qui permet de positionner un point d'arrêt du programme musical.

Cette fonction d'agenda génère deux listes de diffusion :
- une liste classée par titres et messages informant du jour et heure de diffusion de chaque titre et messages,
- une liste classée par jour de diffusion en formant des titres et messages diffusés par jour.

Le gestionnaire de programme permet la création, c'est-à-dire la composition de programmes non automatiquement mais manuellement, l'édition, la modification et la suppression d'un programme ou d'un échantillon dans un programme.

Les programmes sont établis manuellement à partir de la banque musicale et des messages classés notamment par interprètes, titres, rythmes, styles, langues et durées ; la recherche se fait de manière intuitive selon les critères donnés.

Ce gestionnaire gère la base de données en fonction des titres présents dans les disques et les répertoires.

Le gestionnaire de diffusion contient la totalité des titres et messages classés comme dans le gestionnaire de programmes avec recherche intuitive. Ce gestionnaire contient la totalité des programmes. Il gère le volume et les modes d'interruption, c'est-à-dire lorsqu'un titre est interrompu par un message, un échantillon ou un programme, le titre est repris en fonction du mode choisi soit à l'endroit de l'interruption, soit avec saut au titre suivant, soit par arrêt du programme. Ce gestionnaire assure également la lecture directe des titres ou programmes lancés manuellement ou automatiquement en fonction de l'agenda.

La gestion de la banque musicale est réalisée à l'aide d'un tableur contenant les critères relatifs à chaque échantillon tels que l'interprète, le titre, le nom du fichier, le format, la référence interne du titre, la taille du fichier, la date d'insertion du titre dans la banque, le style, la langue, etc.

Dans la banque musicale, on supprime les intervalles de silence appelés « blancs » d'un titre ou d'un échantillon ou entre les messages.

Les niveaux sonores des différents échantillons sont également réglés les uns par rapport aux autres suivant une courbe de niveau sonore prédéfinie selon le moment (heure de la journée, taux de fréquentation, etc.) ; la banque contient également sous forme d'échantillon, un ensemble d'introduction sonore appelé « jingles » soit classiques soit personnalisés, éventuellement conçus spécialement.

La communication pour l'échange de données entre la centrale et les stations locales se fait comme indiqué par des modems soit par le réseau téléphonique classique RTC, soit par Internet haut débit, en utilisant le protocole PPP (Protocole Point par Point) et le protocole FTP. Il est également possible, voire très intéressant, d'utiliser la transmission par Internet, ce qui permet l'automatisation de la plus grande partie du traitement des informations. Ainsi le client peut formuler ses demandes directement par des applications disponibles sur Internet avec des accès sécurisés. Ces applications sont les suivantes :
- la commande de messages ou échantillons avec les instructions correspondantes,
- la pré-écoute des messages ou échantillons en ligne pour validation, la modification du contenu des programmes en cours ou à venir,
- la consultation de listes de diffusions ; les interprètes, des titres, des agendas avec impressions possibles,
- le suivi de son compte client,
- la correspondance par e-mail entre les clients et la centrale,
- le service « Hot Ligne en ligne », les statistiques en ligne de son compte, l'automatisation de son compte en ligne,
- robots de contrôles vérifiant l'intégrité des données et du bon fonctionnement du terminal présent chez le client. Ce module permet la surveillance permanente du bon fonctionnement de chaque terminal actif avec alertes immédiates auprès des techniciens en cas de dysfonctionnements.

Chaque client dispose d'un accès personnalisé sur Internet. Cet accès est sécurisé.

Ainsi le client peut accéder de façon permanente sans discontinuité, directement sur le site de la centrale. L'accès permanent du client se fait de préférence à haut débit à Internet CABLE, ADSL ou BLR (Boucle Radio Locale).

## Revendications

1. Système évolutif d'animation personnalisée et sectorisée pour émettre un programme de musique, de messages, d'émission de senteurs, d'images numériques, de lumières, selon des programmes préétablis mais évolutifs,
**caractérisé en ce qu'**il comprend
une centrale de gestion et de commande reliée à au moins une station locale associée à une installation d'animation comprenant une installation de sonorisation pour lui fournir les signaux sonores à émettre
A) la centrale (C) comprenant
* un micro-ordinateur (µP) gérant
- une banque de musique (BMUS) contenant les échantillons musicaux (ECHi) disponibles pour établir des programmes musicaux à diffuser,
- un fichier de programmes d'échantillons (F-PRECH),
- un fichier de messages d'animation (F-MESS),
- un ficher agenda (FAGEN) contenant les grilles de diffusion (période d'émission des programmes d'échantillons et des messages) en fonction des jours et des heures du jour,
- un fichier des clients (F-CL/-STi) et des stations locales associées à la centrale (C),
* des moyens d'entrée (E1E2E3) pour
- des informations musicales pour réaliser compléter et renouveler la banque musicale par l'ajout ou la suppression d'échantillons,
- des informations relatives aux clients,
- des informations de mise à jour des informations des clients,
* des moyens d'accès direct (ACCDIR) pour une intervention dans une station locale (STi), de manière prioritaire à son fonctionnement programmé,
* un moyen de compression (COMP) des données sonores,
* un modem (MODS) en sortie de la centrale (C) pour communiquer avec les stations locales (STi),
B) au moins une station locale (STi) comprenant
* une unité centrale (µPI) et au moins un disque dur (DDI) recevant
- les échantillons comprimés, les messages comprimés, et les programmes d'échantillons associés à la station locale,
- un moyen de décompression en sortie de station,
- un modem (MODE) à l'entrée de la station (STi) locale pour communiquer avec la centrale (C),
C) la centrale (C) établissant pour chaque station locale (STi) ou groupe de stations locales,
* un programme d'échantillons et de messages d'animation contenant les références des échantillons et des messages
* un agenda des échantillons et des messages (dates d'émission),
le programme d'échantillons étant établi en fonctions des informations décrivant le site dans lequel se trouve l'installation de sonorisation,
la centrale transmettant à chaque station locale
- les échantillons et les messages comprimés, les programmes d'échantillons et de messages d'animation ainsi que l'agenda pour les enregistrer dans la station locale,
l'émission des signaux vers l'installation de sonorisation (SONO) étant gérée localement par l'unité centrale (UPI) de la station locale (STi) selon le programme d'échantillons et de messages et l'agenda,
les signaux sonores étant décomprimés en sortie de station avant d'attaquer l'installation de sonorisation.

2. Système d'animation personnalisée et sectorisée selon la revendication 1,
**caractérisé en ce que**
la centrale (C) transmet les informations et les fichiers vers une station locale (Sti) par le réseau téléphonique (RTC).

3. Système d'animation personnalisée et sectorisée selon la revendication 1,
**caractérisé en ce que**
la centrale (C) transmet les informations et les fichiers à une station locale (STi) par Internet.

4. Système d'animation personnalisée et sectorisée selon la revendication 1,
**caractérisé en ce que**
l'accès à la centrale (C) se fait par Internet.

5. Système d'animation personnalisée et sectorisée selon la revendication 1,
**caractérisé en ce que**
la centrale (C) génère deux listes de diffusion
- une liste classée par titres et messages d'animation informant du jour et heure de diffusion de chaque titre et messages,
- une liste classée par jour de diffusion en formant des titres et messages émis et diffusés par jour.

6. Système d'animation personnalisée et sectorisée selon la revendication 1,
**caractérisé en ce que**
les messages d'animation comprennent des messages vocaux, des messages sonores, des messages vidéo numérisés et des messages olfactifs.

7. Système d'animation personnalisée et sectorisée selon la revendication 6,
**caractérisé en ce que**
les messages lumineux et les messages olfactifs comprennent des signaux de commande d'installations locales d'émission, telles que des installations lumineuses, de vidéo-projection et des pulvérisateurs ou des diffuseurs de parfum et de senteur.
